# EUROPEAN PATENT SPECIFICATION

(11) **EP 2 377 721 B1**
(45) Date of publication and mention of the grant of the patent: **16.09.2015**
(21) Application number: 11162914.3
(22) Date of filing: 18.04.2011
(51) Int. Cl.: B60Q 1/26, B60Q 1/00, F21S 8/12

(54) **Rear lamp for vehicles**
Rücklicht für Fahrzeuge
Feu arrière pour véhicules

(30) Priority: 16.04.2010 IT TV20100065
(43) Date of publication of application: 19.10.2011
(73) Proprietor: Automotive Lighting Italia S.p.A., 10078 Venaria Reale (Torino) (IT)
(72) Inventor: Marcori, Franco, 33015 Moggio Udinese (IT); Rainis, Pietro, 33028 Tolmezzo (IT)
(74) Representative: Bergadano, Mirko

(56) References cited:
- EP-A1- 1 288 562
- DE-A1- 10 361 488
- DE-A1-102005 036 018
- DE-A1-102007 033 706
- DE-A1-102008 021 900
- US-A1- 2006 083 016

## Description

The present invention relates to a rear light for motor vehicles and the like.

More in detail, the present invention relates to a rear light for cars, use to which the following description refers purely by way of example without implying any loss of generality.

As is known, the car rear lights must be able to emit an intense red light when the brakes of the vehicle are applied, a white light when reverse gear is engaged, a yellow/orange light when the direction indicators are activated and, lastly, a red light to indicate the presence and size of the vehicle at night and, more in general, in poor ambient light conditions.

The first car rear lights were formed by a number of basic independent lamps, which were arranged side by side and structured to each emit a respective light signal. Each lamp consisted of a cup-shaped body with a more or less parabolic profile, which had a mirror-finished metalized inner surface so as to reflect incident light; of an incandescent light bulb located near to the bottom of the cup-shaped body, more or less at the centre of the cup-shaped body; and of a lenticular body in a coloured transparent or semitransparent plastic material, which covered the mouth of the cup-shaped body so that the light emitted by the light source passed through it. Obviously, the colour of the lamp's lenticular body varied in function of the type of light signal to be emitted.

Over the years a progressive integration of the rear light into the outer profile of the car's bodywork has been witnessed, and a simultaneous reduction in the number and size of the basic lamps that form the rear light, with the consequent integration of two or more functions into a single lamp.

In addition, new regulations have established that, barring a few exceptions, the light signals emitted by the car rear lights must originate from separate and distinct zones of the light's body, so as to be more easily and rapidly identifiable by the drivers of the motor vehicles that follow.

These constructional constraints have driven some manufacturers of car rear lights to position, around the lamp's lenticular body, an annular-shaped second light source that is powered in a completely separate and independent manner from the lamp's light bulb, so that it can generate a second light signal.

In the rear lights of more modern cars, the annular light source is formed by a number of light emitting diodes, commonly called LEDs, which are distributed along the entire outer peripheral rim of the cup-shaped body, at the side of the lenticular body, so as to encircle the mouth of the cup-shaped body; and by an annular protective frame in a transparent or semitransparent plastic material, which is placed to cover the LEDs and usually has a different colour from that of the lenticular body that it surrounds.

Unfortunately, although functioning very well, this solution has caused a significant increase in the production costs of lights, because the outer surface of the cup-shaped body must now be structured to firmly retain the annular board that supports and powers the ring of LEDs that surround the lamp's lenticular body. For this reason, the cup-shaped bodies of more modern rear lights are made of a superior and more expensive plastic, able to withstand the high temperatures reached by the LED mounting board when in function.

Furthermore, the lamp's cup-shaped body must also be equipped with the necessary electrical wiring to take electricity to the board positioned next to the mouth of the cup-shaped body, with all the assembly problems that this entails.

Document DE 10 2005 036 018 Al discloses a rear light for motor vehicles according to the preamble of claim 1.

Aim of the present invention is that of making a car rear light that is devoid of the above-described drawbacks and that is also cheaper to produce.

In compliance with the above aims, according to the present invention there is provided a rear light for motor vehicles and the like as specified in claim 1 and preferably, though not necessarily, in any of its dependent claims.

A non-limiting embodiment of the present invention will now be described with reference to the accompanying drawings, in which:
- Figure 1 shows a partially-exploded axonometric view of a car rear light realized in accordance with the teachings of the present invention; and
- Figure 2 is a side cross-sectional view of the light shown in Figure 1, with parts removed for clarity.

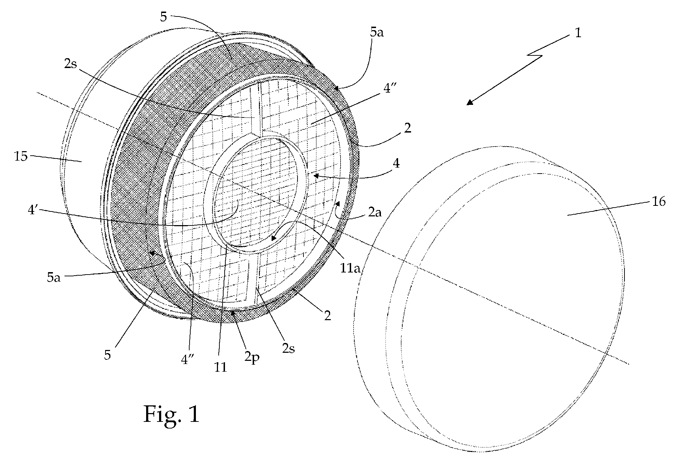

With reference to Figure 1, reference number 1 indicates as a whole a rear light for motor vehicles and the like, which finds particularly advantageous application in present-day cars.

The rear light 1 comprises: at least one preferably, though not necessarily, parabolic profiled, concave cup-shaped body 2 having the inner surface 2i metalized or, in any case, mirror finished so as to reflect incident light; at least one light source 3 that is located close to the bottom of cup-shaped body 2, more or less at the centre of the latter and is structured so as to emit light when electrically powered; and a front lenticular body 4 that is made of a transparent or semitransparent material, possibly even coloured, and is arranged so as to cover the mouth 2a of the cup-shaped body 2, so that the light emitted by the light source(s) 3 passes therethrough.

More in detail, in the example shown, the cup-shaped body 2 preferably, though not necessarily, has a substantially circular shaped cross-section and is preferably, though not necessarily, made of an opaque plastic material, with the inner surface 2i having a metalized mirror finishing so as to reflect incident light.

Unlike currently known rear lights for motor vehicles, the rear light 1 is also equipped with a substantially funnel-shaped tubular light-guiding sleeve 5, which is made of a photoconductive material and is fitted over the outside of the cup-shaped body 2 so that the larger annular rim 5a of the sleeve 5 is substantially adjacent and completely surrounds the outer peripheral rim 2p of the cup-shaped body 2 that defines the mouth 2a and the lenticular body 4, and so that the smaller annular rim 5b of the sleeve 5 is substantially adjacent to the bottom of the cup-shaped body 2; and with a second light source 6 with an approximately annular shape that is arranged facing the smaller annular rim 5b of the sleeve 5, is structured so as to emit light when electrically powered and is oriented so that the light emitted by the light source 6 penetrates inside the sleeve 5 through the annular rim of the latter, propagates to the larger annular rim 5a due to the same physical principles that regulate the propagation of light inside fibre-optic cables, and finally comes out from the larger annular rim 5a of the sleeve 5.

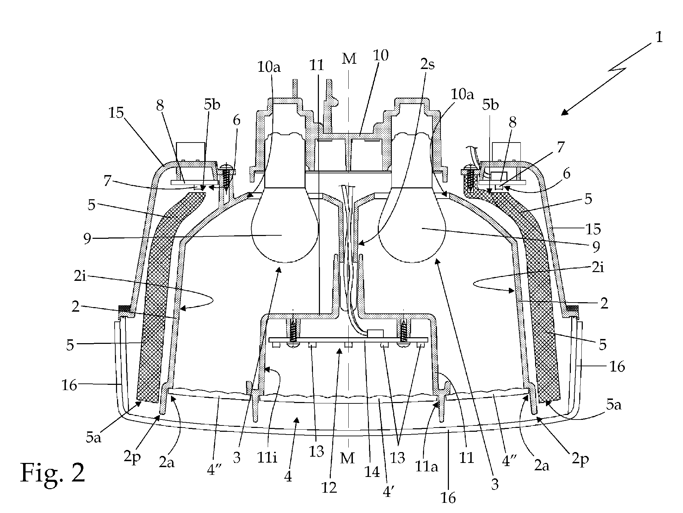

More in detail, with reference to Figure 2, the larger annular rim 5a of the light-guiding sleeve 5 surrounds the outer peripheral rim 2p of the cup-shaped body that defines the mouth 2a of the cup-shaped body 2, such that the outer peripheral rim 2p of the cup-shaped body prevents the light leaving the larger annular rim 5a of the sleeve 5 from reaching the lenticular body 4.

In particular, in the example shown, the sleeve 5 has a cross-sectional shape locally complementary to that of the cup-shaped body 2, i.e. a substantially circular shaped cross-section of varying diameter, so as to remain adherent and/or close-fitting to the side wall of the cup-shaped body 2 and is preferably, though not necessarily, made of a transparent or semitransparent plastic material (such as polycarbonate or polymethyl methacrylate, for example), possibly even coloured; whereas the annular-shaped light source 6 is formed by a series of light emitting diodes 7, commonly called LEDs, which are appropriately distributed along the entire smaller annular rim 5b of the sleeve 5 so as to directly face the rim of the sleeve 5 and are oriented so that the light emitted by each LED 7 penetrates inside the sleeve 5 through the rim of the latter, propagates to the larger annular rim 5a due to the same physical principles that regulate the propagation of light inside fibre-optic cables, and finally comes out from the larger annular rim 5a of the sleeve 5.

In particular, in the example shown, LEDs 7 are appropriately distributed on a substantially annular supporting and power-supplying board 8 that, in turn, is positioned close to the smaller annular rim 5b of the sleeve 5, so that the various LEDs 7 are facing the body of the sleeve 5, preferably, though not necessarily, in direct contact with the rim of the latter, and the optical axis of the light cone generated by each LED 7 is locally substantially perpendicular to the surface of the smaller annular rim 5b, such that the light emitted by each LED 7 hits the rim of the sleeve 5 remaining locally substantially perpendicular to the surface of the sleeve 5.

With reference to Figures 1 and 2, in the example shown, the cup-shaped body 2 is also preferably, though not necessarily, provided with a central partitioning wall 2s that rises from the bottom of the cup-shaped body 2 substantially perpendicular to the latter, and extends towards the mouth 2a of the cup-shaped body 2 remaining substantially coplanar with the centre plane M of the cup-shaped body 2, so as to subdivide the space inside the cup-shaped body 2 into two complementary compartments that communicate with the outside through the mouth 2a where the lenticular body 4 is placed; and the rear light 1 is equipped with two light sources 3, which are located close to the bottom of the cup-shaped body 2, on opposite sides of the partitioning wall 2s, and are structured so as to emit light independently of one another when they are electrically powered.

More in detail, in the example shown, the two main light sources 3 are preferably, though not necessarily, formed by two incandescent light bulbs 9 or the like, which are removably fitted into a common light-bulb socket 10 that, in turn, is structured so as to be inserted/mortised in a rigid and stable, though easily releasable, manner within a specially provided through-hole 10a made in the bottom of the cup-shaped body 2, so as to make the two light bulbs 9 project inside the cup-shaped body 2, on opposite sides of the partitioning wall 2s.

The electrical circuits in the light-bulb socket 10 are structured so that is it possibly to switch on the two incandescent light bulbs 9 separately from each other.

With reference to Figures 1 and 2, the rear light 1 also comprises a second cup-shaped body 11, which is rigidly fixed to the partitioning wall 2s, more or less at the centre of the cup-shaped body 2 and above the two main light sources 3, with the concavity facing the mouth 2a of the cup-shaped body 2, i.e. towards the central area of the lenticular body 4 immediately above, and a third light source 12 that is located substantially close to the bottom of the cup-shaped body 11, more or less at the centre of the latter, and is also structured so as to emit light when electrically powered.

More in detail, the cup-shaped body 11 is fixed on the partitioning wall 2s so that its mouth 11a is positioned more or less at the centre of mouth 2a of cup-shaped body 2 and has its inner surface 11i preferably, though not necessarily, metalized or, in any case, mirror finished so as to reflect incident light; while light source 12 is formed by a plurality of light emitting diodes 13, commonly called LEDs, which are appropriately distributed on a disc-shaped supporting and power-supplying board 14 that, in turn, is fixed to the bottom of cup-shaped body 11, more or less at the centre of the latter, with the LEDs 13 facing mouth 11a.

In the example shown, light source 12 is preferably, though not necessarily, also electrically connected to the light source 6 so as to be simultaneously switched on and off with the latter.

With reference to Figures 1 and 2, the lenticular body 4 is instead preferably, though not necessarily, subdivided into a disc-shaped central lens 4', which covers the mouth 11a of the cup-shaped body 11, so that only light emitted by the additional light source 12 passes therethrough; and two side lenses 4" with substantially the shape of a sector of a circular crown, which are placed to cover the two portions of the mouth 2a of the main cup-shaped body 2 corresponding to the two compartments defined by the partitioning wall 2s, so that only the light emitted by the two main light sources 3 passes therethrough.

Finally, in the example shown, the lenses 4' and 4" are preferably, though not necessarily, made of a transparent or semitransparent plastic material, preferably, though not necessarily, with mutually different colours. In addition, if the light sources 6 and 12 are powered in parallel, the sleeve 5 is made of a plastic material having substantially the same colour as the plastic material used to make the central lens 4' .

With reference to Figures 1 and 2, preferably, though not necessarily, the rear light 1 is equipped with a rigid outer casing or shell 15, which is provided with a central cavity shaped to house the sleeve 5, the cup-shaped body 2 and the light sources 3 and 6, and is preferably, though not necessarily, structured so that it can be firmly recessed in the rear part of the car body; and with a rigid cover 16 in a transparent material, which is placed to hermetically seal the rigid outer shell 15, immediately over the lenticular body 4 and the larger annular rim 5a of the sleeve 5, to cover and protect them.

In particular, the board 8 of light source 6 is directly fixed to the bottom of the rigid outer shell 15, so as to reduce thermal stress on the cup-shaped body 2.

The rigid outer shell 15 and the rigid cover 16 are both preferably, though not necessarily, made of a plastic material and are secured together in a rigid and fixed manner, preferably, though not necessarily, by means of a vibration welding process.

The functioning of the above-described rear light 1 is easily deducible from that written in the foregoing and therefore does not require further explanation. Other than for pointing out that the outer peripheral rim 2p of the cup-shaped body 2 prevents the light leaving the larger annular rim 5a of the light-guiding sleeve 5 from reaching the lenticular body 4. In this way, the emission area of the light signal generated by light sources 3 remains completely separate and distinct from the emission area of the light signal generated by light source 6, considerably improving perception of the two light signals.

The rear light 1 is therefore able to emit, by choice, light signals with three/four different colours, whilst having the equivalent bulk of a single conventional basic lamp.

The advantages associated with the particular structure of rear light 1 are numerous.

First of all, the board 8 of light source 6 is now fixed directly to the bottom of the rigid outer shell 15, enabling the cup-shaped body 2 to be made using less expensive plastic material. In addition, light source 6 is now located in the immediate vicinity of the light-bulb socket 10, eliminating electrical wiring from the cup-shaped body 2. This elimination results in a reduction in production costs for the light.

Furthermore, the intensity of the light coming from the larger annular rim 5a of the sleeve 5 is substantially uniform along the entire perimeter of the lenticular body 4, making the light signal leaving the sleeve 5 qualitatively better than that obtained by positioning a ring of LEDs directly on the mouth of the cup-shaped body 2.

Lastly, the powering in parallel of light sources 6 and 12 enables the simultaneous lighting of two different and concentric portions of the rear light 1, obtaining a light signal different from that achievable from any other currently known type of rear light for cars.

Finally, it is understood that changes or modifications may be made to the rear light 1 for cars described and illustrated herein without departing from the scope of the present invention.

For example, in a more sophisticated not-shown embodiment, even the two main light sources 3 can be formed by two different sets of light emitting diodes, commonly called LEDs, which are appropriately distributed on a single and preferable, though not necessarily, disc-shaped, supporting and power-supplying board which is fixed to the bottom of the cup-shaped body 2, closing the through hole 10a in place of the light-bulb socket 10. Obviously, the two sets of LEDs face the inside of the cup-shaped body 2 and are arranged on opposite sides of the partitioning wall 2s.

Furthermore, in this embodiment, it is possible to place the LEDs 7 that form the light source 6, directly on the perimetric edge of the board that closes the through hole 10a made in the bottom of the cup-shaped body 2, with the circuit advantages that this brings.

## Claims

1. A rear light (1) for motor vehicles comprising: at least a first cup-shaped body (2) having the inner surface (2i) mirror finished so as to reflect the incident light; at least one main light source (3) which is located close to the bottom of said first cup-shaped body (2), and is structured so as to emit light when electrically powered; and a front lenticular body (4) which is made of transparent or semitransparent material, and is arranged so as to cover the mouth (2a) of said first cup-shaped body (2), so that the light emitted by said at least one main light source (3) passes therethrough;
the rear light (1) being **characterized by** also comprising:
- a tubular light-guiding sleeve (5) made of photoconductive material and which is fitted over the outside of the cup-shaped body (2), so that the larger annular rim (5a) of the sleeve (5) is substantially adjacent to and surrounds the outer peripheral rim (2p) of the cup-shaped body that defines the mouth (2a) of the cup-shaped body (2), and so that the smaller annular rim (5b) of the sleeve (5) is substantially adjacent to the bottom of the first cup-shaped body (2), and
- a first additional light source (6) which is arranged facing the smaller annular rim (5b) of the sleeve (5), is structured so as to emit light when electricity powered and is oriented so that the light emitted by the additional light source (6) penetrates within the sleeve (5) through the rim of the latter and propagates to the larger annular rim (5a);
the larger annular rim (5a) of the sleeve (5) being furthermore arranged so that the outer peripheral rim (2p) of the first cup-shaped body (2) prevents the light leaving the larger annular rim (5a) of the sleeve (5) from reaching the lenticular body (4).

2. Rear light according to Claim 1, **characterized in that** the sleeve (5) has a cross-sectional shape locally complementary to that of the cup-shaped body (2) so as to remain adherent and/or close-fitting to the side wall of the cup-shaped body (2).

3. Rear light according to Claim 1 or 2, **characterized in that** the first additional light source (6) has a substantially annular shape.

4. Rear light according to Claim 3, **characterized in that** the first additional light source (6) comprises a number of light emitting diodes (7), which are appropriately distributed along the whole smaller annular rim (5b) of the sleeve (5) so as to be directly facing the rim of the sleeve (5) and are oriented so that the light emitted by each diode (7) penetrates within the sleeve (5) through the rim of the latter.

5. Rear light according to any one of the previous claims, **characterized in that** the cup-shaped body (2) is provided with a central partitioning wall (2s) that extends from the bottom of the first cup-shaped body (2) towards the mouth (2a) of the latter, dividing the space within the first cup-shaped body (2) into two complementary compartments that communicate with the outside through the mouth (2a) where the lenticular body (4) is placed, and by comprising two main light sources (3) that are located close to the bottom of the first cup-shaped body (2), on opposite sides of the partitioning wall (2s), and are structured so as to emit light independently of one another, when they are electrically powered.

6. Rear light according to Claim 5, **characterized in that** the two main light sources (3) comprise two light bulbs (9) or the like which are removably fitted into a common light-bulb socket (10) that, in turn, is structured so as to be fitted in a rigid and stable, though easily releasable, manner within a through-hole (10a) made in the bottom of the first cup-shaped body (2), so that the two light bulbs (9) or the like project within the first cup-shaped body (2), on opposite sides of the partitioning wall (2s).

7. Rear light according to Claim 5 or 6, **characterized by** also comprising a second cup-shaped body (11) that is rigidly fixed on the partitioning wall (2s) within the first cup-shaped body (2) and above the two main light sources (3), with the concavity facing the mouth (2a) of the first cup-shaped body (2), and a second additional light source (12) that is located close to the bottom of the second cup-shaped body (11) and is structured so as to emit light when electrically powered.

8. Rear light according to Claim 7, **characterized in that** the second additional light source (12) comprises a plurality of light emitting diodes (13) appropriately distributed on a supporting and power-supplying board (14) that, in turn, is fixed to the bottom of the second cup-shaped body (11), with the diodes (13) facing the mouth (11a) of the second cup-shaped body (11).

9. Rear light according to Claim 7 or 8, **characterized in that** the second cup-shaped body (11) is fixed to the partitioning wall (2s) of the first cup-shaped body (2) so that its mouth (11a) is positioned approximately at the centre of the mouth (2a) of the first cup-shaped body (2).

10. Rear light according to Claim 7, 8 or 9, **characterized in that** the inner surface (11i) of the second cup-shaped body (11) is mirror finished so as to reflect the incident light.

11. Rear light according to any one of Claims 7 to 10, **characterized in that** the second additional light source (12) is electrically connected to the first additional light source (6) so as to switch on and off simultaneously with the latter.

## Patentansprüche

1. Rücklicht (1) für Kraftfahrzeuge, aufweisend: mindestens einen ersten napfförmigen Körper (2), dessen innere Oberfläche (2i) hochglanzpoliert ist, um das einfallende Licht zu reflektieren; mindestens eine Hauptlichtquelle (3), die sich nahe der Unterseite des ersten napfförmigen Körpers (2) befindet und so strukturiert ist, dass sie Licht aussendet, wenn ihr elektrische Energie zugeführt wird; und einen vorderen linsenförmigen Körper (4), der aus transparentem oder halbtransparentem Material hergestellt ist und so angeordnet ist, dass er die Mündung (2a) des ersten napfförmigen Körpers (2) bedeckt, sodass das von der mindestens einen Hauptlichtquelle (3) ausgesendete Licht dort hindurchtritt;
wobei das Rücklicht (1) **dadurch gekennzeichnet ist, dass** es auch aufweist:
- eine rohrförmige, Licht leitende Hülse (5), die aus fotoleitendem Material hergestellt ist und die über der Außenseite des napfförmigen Körpers (2) angebracht ist, sodass der größere ringförmige Kranz (5a) der Hülse (5) im Wesentlichen an den äußeren umlaufenden Kranz (2p) des napfförmigen Körpers, der die Mündung (2a) des napfförmigen Körpers (2) festlegt, angrenzt und ihn umgibt und sodass der kleinere ringförmige Kranz (5b) der Hülse (5) im Wesentlichen an die Unterseite des ersten napfförmigen Körpers (2) angrenzt, und
- eine erste zusätzliche Lichtquelle (6), die dem kleineren ringförmigen Kranz (5b) der Hülse (5) zugewandt angeordnet ist, so strukturiert ist, dass sie Licht aussendet, wenn ihr elektrische Energie zugeführt wird, und so ausgerichtet ist, dass das von der zusätzlichen Lichtquelle (6) ausgesendete Licht innerhalb der Hülse (6) durch den Kranz der Letzteren dringt und sich zum größeren ringförmigen Kranz (5a) ausbreitet;
wobei der größere ringförmige Kranz (5a) der Hülse (5) ferner so angeordnet ist, dass der äußere umlaufende Kranz (2p) des ersten napfförmigen Körpers (2) verhindert, dass das den größeren ringförmigen Kranz (5a) der Hülse (5) verlassende Licht den linsenförmigen Körper (4) erreicht.

2. Rücklicht nach Anspruch 1, **dadurch gekennzeichnet, dass** die Hülse (5) eine Querschnittsform hat, die lokal komplementär zu derjenigen des napfförmigen Körpers (2) ist, sodass sie weiterhin an die Seitenwand des napfförmigen Körpers (2) angrenzt und/oder eng anliegt.

3. Rücklicht nach Anspruch 1 oder 2, **dadurch gekennzeichnet, dass** die erste zusätzliche Lichtquelle (6) im Wesentlichen ringförmig ist.

4. Rücklicht nach Anspruch 3, **dadurch gekennzeichnet, dass** die erste zusätzliche Lichtquelle (6) eine Anzahl von Leuchtdioden (7) aufweist, die in geeigneter Weise entlang dem gesamten kleineren ringförmigen Kranz (5b) der Hülse (5) verteilt sind, sodass sie dem Kranz der Hülse (5) direkt zugewandt sind, und so ausgerichtet sind, dass das von jeder Diode (7) ausgesendete Licht innerhalb der Hülse (5) durch den Kranz der Letzteren dringt.

5. Rücklicht nach einem der vorangegangenen Ansprüche, **dadurch gekennzeichnet, dass** der napfförmige Körper (2) mit einer mittigen Trennwand (2s) versehen ist, die sich von der Unterseite des ersten napfförmigen Körpers (2) in Richtung der Mündung (2a) des Letzteren erstreckt, wobei sie den Raum innerhalb des ersten napfförmigen Körpers (2) in zwei komplementäre Abteile, die durch die Mündung (2a), wo der linsenförmige Körper (4) angeordnet ist, mit der Außenseite in Verbindung stehen, unterteilt, und dadurch, dass es zwei Hauptlichtquellen (3) aufweist, die sich nahe der Unterseite des ersten napfförmigen Körpers (2), auf gegenüberliegenden Seiten der Trennwand (2s), befinden und so strukturiert sind, dass sie unabhängig voneinander Licht aussenden, wenn ihnen elektrische Energie zugeführt wird.

6. Rücklicht nach Anspruch 5, **dadurch gekennzeichnet, dass** die zwei Hauptlichtquellen (3) zwei Glühbirnen (9) oder dergleichen aufweisen, die in eine gewöhnliche Glühbirnenfassung (10) entfernbar eingesetzt sind, die ihrerseits so strukturiert ist, dass sie in einer starren und stabilen und doch leicht lösbaren Weise innerhalb eines in der Unterseite des ersten napfförmigen Körpers (2) hergestellten Durchgangslochs (10a) eingesetzt ist, sodass die zwei Glühbirnen (9) oder dergleichen innerhalb des ersten napfförmigen Körpers (2), auf gegenüberliegenden Seiten der Trennwand (2s), vorspringen.

7. Rücklicht nach Anspruch 5 oder 6, **dadurch gekennzeichnet, dass** es auch einen zweiten napfförmigen Körper (11), der an der Trennwand (2s) innerhalb des ersten napfförmigen Körpers (2) und über den zwei Hauptlichtquellen (3) starr befestigt ist, wobei die Höhlung der Mündung (2a) des ersten napfförmigen Körpers (2) zugewandt ist, und eine zweite zusätzliche Lichtquelle (12), die nahe der Unterseite des zweiten napfförmigen Körpers (11) angeordnet ist und so strukturiert ist, dass sie Licht aussendet, wenn ihr elektrische Energie zugeführt wird, aufweist.

8. Rücklicht nach Anspruch 7, **dadurch gekennzeichnet, dass** die zweite zusätzliche Lichtquelle (12) eine Vielzahl von Leuchtdioden (13) aufweist, die in geeigneter Weise auf einer stützenden und Energie zuführenden Platte (14), die ihrerseits an der Unterseite des zweiten napfförmigen Körpers (11) befestigt ist, verteilt sind, wobei die Dioden (13) der Mündung (11a) des zweiten napfförmigen Körpers (11) zugewandt sind.

9. Rücklicht nach Anspruch 7 oder 8, **dadurch gekennzeichnet, dass** der zweite napfförmige Körper (11) an der Trennwand (2s) des ersten napfförmigen Körpers (2) so befestigt ist, dass seine Mündung (11a) annähernd in der Mitte der Mündung (2a) des ersten napfförmigen Körpers (2) angeordnet ist.

10. Rücklicht nach Anspruch 7, 8 oder 9, **dadurch gekennzeichnet, dass** die innere Oberfläche (11i) des zweiten napfförmigen Körpers (11) hochglanzpoliert ist, um das einfallende Licht zu reflektieren.

11. Rücklicht nach einem der Ansprüche 7 bis 10, **dadurch gekennzeichnet, dass** die zweite zusätzliche Lichtquelle (12) an die erste zusätzliche Lichtquelle (6) elektrisch angeschlossen ist, um gleichzeitig mit Letzterer ein- und auszuschalten.

## Revendications

1. Feu arrière (1) pour des véhicules motorisés comprenant : au moins un premier corps en forme de coupe (2), dont la surface intérieure (2i) est polie miroir de sorte à réfléchir la lumière incidente ; au moins une source de lumière principale (3) qui est située près du fond dudit premier corps en forme de coupe (2) et est structurée de sorte à émettre de la lumière lorsqu'elle est sous tension électrique ; et un corps lenticulaire avant (4) qui est constitué de matériau transparent ou semi-transparent et est agencé afin de recouvrir l'ouverture (2a) dudit premier corps en forme de coupe (2) de sorte que la lumière émise par ladite au moins une source de lumière principale (3) passe au travers ;
le feu arrière (1) étant **caractérisé en ce qu'**il comprend aussi :
- un manchon (5) tubulaire guidant la lumière en un matériau photoconducteur et qui est monté sur le côté extérieur du corps en forme de coupe (2) de sorte que le bord annulaire plus grand (5a) du manchon (5) soit sensiblement adjacent au et entoure le bord périphérique extérieur (2p) du corps en forme de coupe qui définit l'ouverture (2a) du corps en forme de coupe (2), et de sorte que le bord annulaire plus petit (5b) du manchon (5) soit sensiblement adjacent au fond du premier corps en forme de coupe (2) et
- une première source de lumière supplémentaire (6) qui est agencée de sorte à faire face au bord annulaire plus petit (5b) du manchon (5) est structurée de sorte à émettre de la lumière lorsqu'elle est sous tension électrique et est orientée de sorte que la lumière émise par la source de lumière supplémentaire (6) pénètre dans le manchon (5) par le bord de ce dernier et se propage au bord annulaire plus grand (5a) ;
le bord annulaire plus grand (5a) du manchon (5) étant de plus agencé de sorte que le bord périphérique extérieur (2p) du premier corps en forme de coupe (2) empêche que la lumière quittant le bord annulaire plus grand (5a) du manchon (5) n'atteigne le corps lenticulaire (4).

2. Feu arrière selon la revendication 1, **caractérisé en ce que** le manchon (5) présente une forme de section transversale localement complémentaire à celle du corps en forme de coupe (2) de sorte à rester collé et/ou à fleur de la paroi latérale du corps en forme de coupe (2).

3. Feu arrière selon la revendication 1 ou 2, **caractérisé en ce que** la première source de lumière supplémentaire (6) présente une forme sensiblement annulaire.

4. Feu arrière selon la revendication 3, **caractérisé en ce que** la première source de lumière supplémentaire (6) comprend un nombre de diodes électroluminescentes (7) qui sont distribuées de manière appropriée le long de l'ensemble du bord annulaire plus petit (5b) du manchon (5) de sorte à faire face directement au bord du manchon (5) et sont orientées de sorte que la lumière émise par chaque diode (7) pénètre dans le manchon (5) par le bord de ce dernier.

5. Feu arrière selon l'une quelconque des revendications précédentes, **caractérisé en ce que** le corps en forme de coupe (2) est doté d'une paroi de séparation centrale (2s) qui s'étend du fond du premier corps en forme de coupe (2) vers l'ouverture (2a) de ce dernier, divisant l'espace dans le premier corps en forme de coupe (2) en deux compartiments complémentaires qui communiquent avec l'extérieur par l'ouverture (2a) où le corps lenticulaire (4) est placé, et **en ce qu'**il comprend deux sources de lumière principales (3) qui sont situées près du fond du premier corps en forme de coupe (2), sur des côtés opposés de la paroi de séparation (2s), et sont structurées de sorte à émettre de la lumière indépendamment l'une de l'autre lorsqu'elles sont sous tension électrique.

6. Feu arrière selon la revendication 5, **caractérisé en ce que** les deux sources de lumière principales (3) comprennent deux ampoules (9) ou similaire qui sont montées de manière détachable dans une douille d'ampoule (10) commune qui est structurée à son tour de sorte à être montée de manière rigide et stable, cependant facilement détachable, dans un trou débouchant (10a) situé dans le fond du premier corps en forme de coupe (2) de sorte que les deux ampoules (9) ou similaire fassent saillie dans le premier corps en forme de coupe (2) sur des côtés opposés de la paroi de séparation (2s).

7. Feu arrière selon la revendication 5 ou 6, **caractérisé en ce qu'**il comprend aussi un second corps en forme de coupe (11) qui est fixé rigidement sur la paroi de séparation (2s) dans le premier corps en forme de coupe (2) et au-dessus des deux sources de lumière principales (3), la concavité faisant face à l'ouverture (2a) du premier corps en forme de coupe (2), et une seconde source de lumière supplémentaire (12) qui est située près du fond du second corps en forme de coupe (11) et est structurée de sorte à émettre de la lumière lorsqu'elle est sous tension électrique.

8. Feu arrière selon la revendication 7, **caractérisé en ce que** la seconde source de lumière supplémentaire (12) comprend une pluralité de diodes électroluminescentes (13) distribuées de manière appropriée sur une plaque de support et d'alimentation électrique (14) qui est fixée à son tour sur le fond du second corps en forme de coupe (11), les diodes (13) faisant face à l'ouverture (11a) du second corps en forme de coupe (11).

9. Feu arrière selon la revendication 7 ou 8, **caractérisé en ce que** le second corps en forme de coupe (11) est fixé sur la paroi de séparation (2s) du premier corps en forme de coupe (2) de sorte que son ouverture (11a) soit positionnée approximativement au centre de l'ouverture (2a) du premier corps en forme de coupe (2).

10. Feu arrière selon la revendication 7, 8 ou 9, **caractérisé en ce que** la surface intérieure (11i) du second corps en forme de coupe (11) est polie miroir de sorte à réfléchir la lumière incidente.

11. Feu arrière selon l'une quelconque des revendications 7 à 10, **caractérisé en ce que** la seconde source de lumière supplémentaire (12) est raccordée électriquement à la première source de lumière supplémentaire (6) de sorte à s'allumer et à s'éteindre en même temps que cette dernière.
